# EUROPÄISCHE PATENTSCHRIFT

(11) **EP 4 147 467 B1**
(45) Veröffentlichungstag und Bekanntmachung des Hinweises auf die Patenterteilung: **20.12.2023**
(21) Anmeldenummer: 21724235.3
(22) Anmeldetag: 04.05.2021
(51) Int. Cl.: H04W 4/40, H04L 67/12, H04W 4/38

(54) **LOKALISIERUNG VON V2X-FÄHIGEN NACHBARFAHRZEUGEN**
LOCATION OF NEIGHBOURING V2X-CAPABLE VEHICLES
LOCALISATION DE VÉHICULES V2X VOISINS

(30) Priorität: 06.05.2020 DE 102020112270
(43) Veröffentlichungstag der Anmeldung: 15.03.2023
(73) Patentinhaber: Audi AG, 85045 Ingolstadt (DE)
(72) Erfinder: HEHN, Thorsten, 85055 Ingolstadt (DE); RAINER, Julia, 85049 Ingolstadt (DE)
(74) Vertreter: Bardehle Pagenberg Partnerschaft mbB Patentanwälte Rechtsanwälte
(86) Internationale Anmeldenummer: PCT/EP2021/061637
(87) Internationale Veröffentlichungsnummer: WO 2021/224214

(56) Entgegenhaltungen:
- CN-A- 107 979 812
- JP-A- 2019 220 858

## Beschreibung

Die Erfindung betrifft ein Verfahren zum Lokalisieren eines V2X (Vehide-to-everything)-fähigen zweiten Fahrzeugs durch ein V2X-fähiges erstes Fahrzeug. Des Weiteren betrifft die Erfindung ein System mit einem ersten V2X-fähigen Fahrzeug und mindestens einem zweiten V2X-fähigen Fahrzeug.

Die Kommunikationstechnologie erlangt zunehmende Bedeutung im Straßenverkehr und hat das Potential die Verkehrssicherheit zu erhöhen. Dabei werden bevorzugt V2X-Kommunikationsverbindungen eingesetzt, um einen Austausch von Daten zwischen V2X-fähigen Fahrzeugen und einer V2X-fähigen Infrastruktur zu ermöglichen. Je nach Verkehrssituation ist eine Erkennung notwendig, ob die V2X-fähigen Fahrzeuge unmittelbar zueinander benachbarte Fahrzeuge sind oder ob sich weitere Verkehrsteilnehmer bzw. Hindernisse zwischen den V2X-fähigen Fahrzeugen befinden. Eine derartige Prüfung wird beispielsweise benötigt, wenn mehrere Fahrzeuge gleichzeitig als ein sogenannter Road-Train (Straßen-Zug) an einer Ampel anfahren. Die Road-Train Funktion kann nicht zuverlässig ausgeführt werden, wenn sich zwischen den Fahrzeugen nicht vernetzte bzw. nicht-V2X-fähige Fahrzeuge befinden.

Zum Feststellen der Positionen der V2X-fähigen Fahrzeuge sind bereits Verfahren bekannt, welche auf einer GNSS-Lokalisierung basieren. Eine GNSS (Globales Navigationssatellitensystem) basierte Lokalisierung ist jedoch nicht flächendeckend verfügbar und weist eine unzureichende Genauigkeit auf.

Aus der DE 10 2015 221 184 A1 sind ein Verfahren und eine Vorrichtung zur Kommunikation im Straßenverkehr bekannt. Es wird eine Zuordnungsinformation für zumindest einen Verkehrsteilnehmer in einem Fahrbahnbereich ermittelt. Eine Trigger-Nachricht wird über eine drahtlose Kommunikationsverbindung an ein oder mehrere Verkehrsteilnehmer in dem Fahrbahnbereich gesendet. Die Trigger-Nachricht zielt darauf ab, eine Funktion eines Verkehrsteilnehmers in einer vorausbestimmten Weise zu bewirken. Das Verfahren umfasst weiterhin ein Detektieren, dass ein erster Verkehrsteilnehmer die Funktion in der vorausbestimmten Weise betätigt, sowie das Ermitteln einer Eigenschaft des ersten Verkehrsteilnehmers.

Die JP 2019 220858 A beschreibt ein System zum Bereitstellen von Sensordaten. Es werden Sensordaten von Fahrzeugen mittels tragbaren Geräten wie Smartphones an einen Server übermittelt. Der Server kann anschließend die empfangenen Sensordaten und Informationen an tragbare Geräte in Fahrzeugen ohne V2X Kommunikation übermitteln. Weiterer Stand der Technik ist aus der CN 107 979 812 A bekannt.

Es ist die Aufgabe der vorliegenden Erfindung, ein Verfahren und ein System bereitzustellen, durch welche zwei V2X-fähige Fahrzeuge sich lokalisieren und nicht-V2X-fähige Fahrzeuge identifizieren können.

Erfindungsgemäß wird diese Aufgabe durch ein Verfahren mit den Merkmalen des Anspruchs 1 und ein System mit den Merkmalen des Anspruchs 9 gelöst. Vorteilhafte Ausgestaltungen und Weiterbildungen ergeben sich aus den abhängigen Ansprüchen.

Das erfindungsgemäße Verfahren dient zum Lokalisieren eines V2X-fähigen zweiten Fahrzeugs durch ein erstes V2X-fähiges Fahrzeug. In einem Schritt wird eine Anforderung von dem ersten Fahrzeug an das zweite Fahrzeug über eine V2X-Kommunikationsverbindung gesendet. Dabei werden Sensordaten von mindestens einem Sensor des zweiten Fahrzeugs über die V2X-Kommunikationsverbindung von dem ersten Fahrzeug empfangen und ausgewertet. Der mindestens eine Sensor kann beispielsweise ein Kamerasensor, LIDAR-Sensor, Radarsensor, Ultraschallsensor, eine Thermografiekamera und dergleichen sein.

In einem weiteren Schritt wird mindestens eine Aktion durch das erste Fahrzeug ausgeführt. Anschließend wird das zweite Fahrzeug relativ zum ersten Fahrzeug lokalisiert, wenn die mindestens eine Aktion des ersten Fahrzeugs anhand der empfangenen Sensordaten des mindestens einen Sensors des zweiten Fahrzeugs detektiert wird.

Kann das erste Fahrzeug sich anhand der Sensordaten des zweiten Fahrzeugs "wiederfinden", sind beide Fahrzeuge unmittelbare Nachbarfahrzeuge. Basierend auf den Sensordaten und der Ausrichtung der jeweiligen Sensoren des zweiten Fahrzeugs kann das erste Fahrzeug seine relative Position gegenüber dem zweiten Fahrzeug bestimmen.

Insbesondere kann das Verfahren zur Feststellung herangezogen werden, ob ein zweites V2X-fähiges Fahrzeug direkt vor dem ersten Fahrzeug, hinter dem ersten Fahrzeug und/oder seitlich vom ersten Fahrzeug steht, oder ob sich noch ein weiteres, nicht-V2X-fähiges Fahrzeug dazwischen befindet.

Durch das Verfahren kann eine relative Lokalisierung von Nachbarfahrzeugen basierend auf einer V2X-Kommunikationsverbindung erfolgen. Der Zugriff auf GNSS-Satelliten ist dabei nicht notwendig.

Das zweite Fahrzeug fungiert dabei als ein Spiegel für das erste Fahrzeug und stellt lediglich Sensordaten des mindestens einen Sensors bereit. Die mindestens eine Aktion des ersten Fahrzeugs kann frei gewählt werden und kann situationsabhängig erfolgen. Beispielsweise kann im Stillstand des ersten Fahrzeugs ein Lenkungseinschlag ausgeführt werden. Während der Fahrt können alternative Aktionen, wie beispielsweise Lichtsignale oder Bewegungen der Seitenspiegel vorteilhaft sein.

Zum Bereitstellen eines kontinuierlichen und stabilen Sensordatenstroms kann vor der Auswertung der Sensordaten eine Prüfung der V2X-Kommunikationsverbindung erfolgen.

Die Erkennung der Aktion des ersten Fahrzeugs anhand der Sensordaten des zweiten Fahrzeugs durch das erste Fahrzeug kann auf die Aktion abgestimmt sein, wodurch eine technisch einfache Analyse der Sensordaten möglich ist. Eine entsprechende Implementierung der Erkennungsalgorithmen im zweiten Fahrzeug ist nicht notwendig, da lediglich die Sensordaten des zweiten Fahrzeugs an das erste Fahrzeug weitergeleitet werden. Hierdurch kann ein sogenanntes Sensor-Sharing des zweiten Fahrzeugs durch das erste Fahrzeug genutzt werden.

Bei einer vorteilhaften Ausgestaltung wird mindestens ein nicht-V2X-fähiges Fahrzeug oder ein Hindernis zwischen dem ersten Fahrzeug und dem zweiten Fahrzeug festgestellt, wenn die mindestens eine Aktion des ersten Fahrzeugs anhand der empfangenen Sensordaten des mindestens einen Sensors des zweiten Fahrzeugs nicht detektiert wird. Durch diese Maßnahme kann eine technisch einfache Prüfung durchgeführt werden, ob das erste Fahrzeug und das zweite Fahrzeug unmittelbare Nachbarfahrzeuge sind.

Gemäß einem weiteren Ausführungsbeispiel wird ein Lichtsignal als mindestens eine Aktion durch das erste Fahrzeug erzeugt, wobei das Lichtsignal durch ein Aktivieren, Deaktivieren und/oder durch ein Verändern einer Helligkeit oder Frequenz mindestens eines Leuchtmittels des ersten Fahrzeugs erzeugt wird. Mit Hilfe der Leuchtmittel kann eine geschwindigkeitsunabhängige Signalisierung ermöglicht werden, welche durch optische Sensoren des zweiten Fahrzeugs detektierbar ist. Dabei kann das Lichtsignal in einem für ein menschliches Auge sichtbaren oder unsichtbaren Wellenlängenbereich erzeugt werden.

Des Weiteren können einzelne LEDs eines Leuchtmittels selektiv oder gemeinsam kurzzeitig aktiviert oder deaktiviert werden. Eine derartige Signalisierung kann beispielsweise durch ein Ansteuern von LEDs von Blinklichtern, Rückleuchten, Bremsleuchten und/oder Tagfahrleuchten realisiert werden.

Nach einer weiteren Ausführungsform wird das Lichtsignal als eine Lichtsignalsequenz durch das erste Fahrzeug erzeugt. Eine derartige Lichtsignalsequenz kann beispielsweise mehrere, nacheinander ausgeführte, Veränderungen der Helligkeit und/oder der Betriebsfrequenz der Leuchtmittel umfassen und somit eine verbesserte Zuverlässigkeit bei der Erkennung der Aktion gewährleisten.

Gemäß einem weiteren Ausführungsbeispiel wird durch das erzeugte Lichtsignal eine digitale Signatur übermittelt. Beispielsweise kann ein Modulieren der Helligkeit bzw. Intensität einzelner LEDs oder Leuchtmittel des ersten Fahrzeugs vom menschlichen Auge unbemerkt erfolgen. Eine derartige Maßnahme kann zum kodierten Übertragen von Information eingesetzt werden. Dabei können Informationen kryptografisch abgesichert und/oder mit einer digitalen Signatur versehen werden.

Gemäß einem weiteren Ausführungsbeispiel wird eine Bewegung als mindestens eine Aktion durch das erste Fahrzeug ausgeführt. Insbesondere kann nach einer weiteren vorteilhaften Ausgestaltung ein Fahrmanöver, eine Lenkeinschlagbewegung, eine Seitenspiegelbewegung, eine Scheibenwischerbewegung, eine Sensorbewegung und/oder eine Handgriffbewegung als mindestens eine Aktion durch das erste Fahrzeug ausgeführt werden. Durch diese Maßnahme kann eine für die Sensorik des zweiten Fahrzeugs sichtbare Fahrzeugbewegung durch das erste Fahrzeug veranlasst werden. Die Bewegung kann dabei durch unterschiedliche Sensoren, wie beispielsweise Radarsensoren, LIDAR-Sensoren oder Kamerasensoren erfasst werden und ist somit redundant feststellbar.

Alternativ oder zusätzlich können beliebige angetriebene Komponenten des ersten Fahrzeugs zum Vollführen einer Bewegung oder einer Bewegungsabfolge eingesetzt werden. Beispielsweise können Spiegel eingeklappt, eine Rückfahrkamera eingefahren oder herausgefahren, eine Scheibenwaschanlage betätig werden und dergleichen.

Nach einer weiteren Ausführungsform wird eine Wärmesignatur als mindestens eine Aktion durch das erste Fahrzeug erzeugt, wobei die Wärmesignatur durch ein Aktivieren einer Scheibenheizung, einer Spiegelheizung und/oder einer Sensorheizung erzeugt wird. Diese Aktion kann vorteilhafterweise ausgeführt werden, wenn das zweite Fahrzeug eine thermisch sensitive Kamera aufweist. Hierdurch können thermische Infrarotstrahlen vom ersten Fahrzeug erzeugt und durch die Sensor-Sharing Funktion detektiert werden, um die mindestens eine Aktion des ersten Fahrzeugs festzustellen.

Eine Lokalisierung des zweiten Fahrzeugs mit Hilfe der Auswertung der Sensordaten des zweiten Fahrzeugs durch das erste Fahrzeug kann basierend auf der Ausrichtung der jeweiligen Sensoren, der Entfernung und der Perspektive durchgeführt werden. Insbesondere können die Sensordaten des zweiten Fahrzeugs als Spiegelbild des ersten Fahrzeugs verwendet werden, sodass zumindest eine grobe Positionierung des ersten Fahrzeugs gegenüber dem zweiten Fahrzeug festgestellt werden kann. Insbesondere kann festgestellt werden, ob das erste Fahrzeug sich vor dem zweiten Fahrzeug, hinter dem zweiten Fahrzeug oder sich seitlich neben dem zweiten Fahrzeug befindet.

Gemäß einem weiteren Aspekt der Erfindung wird ein System bereitgestellt, welches ein erstes V2X-fähiges Fahrzeug und mindestens ein zweites V2X-fähiges Fahrzeug aufweist. Das System ist dazu eingerichtet, das erfindungsgemäße Verfahren auszuführen.

Durch das Ausführen des Verfahrens kann eine technisch einfache und effiziente Prüfung erfolgen, durch welche nicht-V2X-fähige Fahrzeuge zwischen zwei V2X-fähigen Fahrzeugen ermittelbar sind.

Die Erfindung ist anhand von Ausführungsformen in den Zeichnungen schematisch dargestellt und wird unter Bezugnahme auf die Zeichnungen weiter beschrieben. Es zeigt:
Figur 1 ein System gemäß einem erfindungsgemäßen Ausführungsbeispiel und
Figur 2 ein Ablaufdiagramm zum Veranschaulichen des erfindungsgemäßen Verfahrens gemäß einem Ausführungsbeispiel.

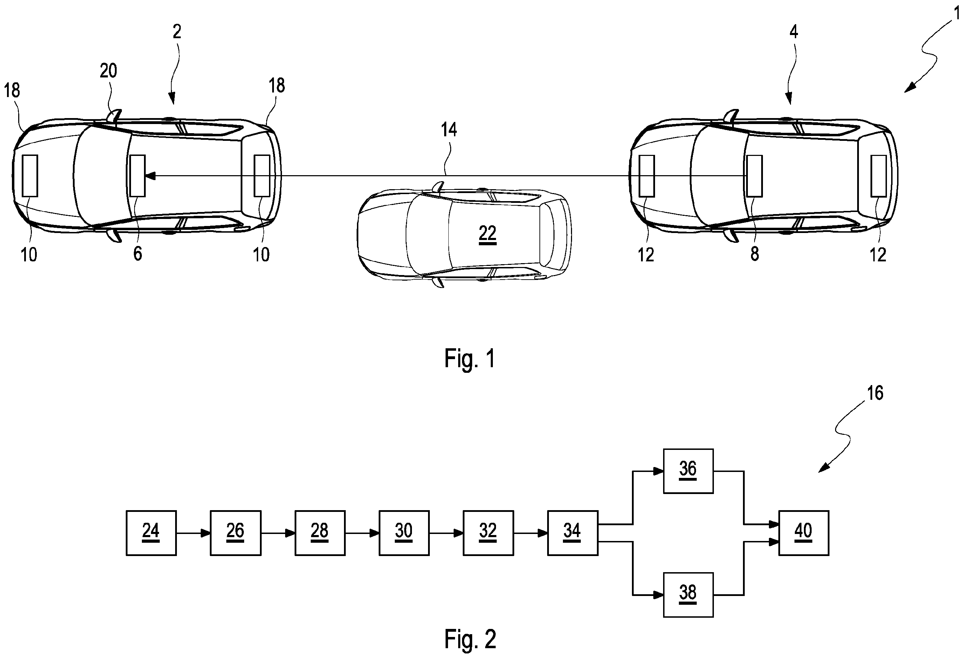

Die Figur 1 zeigt ein System 1 gemäß einem erfindungsgemäßen Ausführungsbeispiel. Das System 1 weist ein erstes V2X-fähiges Fahrzeug 2 und ein zweites V2X-fähiges Fahrzeug 4 auf.

Das erste Fahrzeug 2 und das zweite Fahrzeug 4 weisen jeweils ein Steuergerät 6, 8 auf, welches Sensordaten der jeweiligen Fahrzeugsensoren 10, 12 empfangen und über eine V2X-Kommunikationsverbindung 14 versenden kann. Die V2X-Kommunikationsverbindung 14 kann dabei auf einem WLAN, GSM, LTE, UMTS, 5G und/oder vergleichbaren Übertragungsstandard basieren.

Insbesondere können die Steuergeräte 6, 8 der Fahrzeuge 2, 4 eine V2X-Kommunikationsverbindung 14 herstellen und Sensordaten, Informationen und Anfragen versenden.

Das zweite Fahrzeug 4 kann beispielsweise über das Steuergerät 8 Sensordaten seiner Sensorik 12 an das Steuergerät 6 des ersten Fahrzeugs 2 übermitteln.

Das Steuergerät 6 des ersten Fahrzeugs 2 kann die Sensordaten seiner Sensorik 10 und der Sensorik 12 des zweiten Fahrzeugs 4 empfangen und auswerten.

Die Fahrzeuge 2, 4 können als Sensoren 10, 12 beispielsweise LIDAR-Sensoren, Radarsensoren, Rückfahrkameras, Ultraschallsensoren, Videosensoren und dergleichen aufweisen.

Zum Durchführen des in Figur 2 gezeigten Verfahrens 16 kann das erste Fahrzeug 2 Aktionen ausführen, welche beispielsweise durch Leuchtmittel 18, durch Bewegungen der Seitenspiegel 20 und dergleichen realisierbar ist.

In der Figur 2 ist ein Ablaufdiagramm zum Veranschaulichen des erfindungsgemäßen Verfahrens 16 gemäß einem Ausführungsbeispiel dargestellt. Das Verfahren 16 dient zum Lokalisieren eines V2X-fähigen zweiten Fahrzeugs 4 durch ein V2X-fähiges erstes Fahrzeug 2. Durch das Verfahren 16 kann beispielsweise das erste Fahrzeug 2 herausfinden, ob sich ein nicht-V2X-fähiges Fahrzeug 22 zwischen dem ersten Fahrzeug 2 und dem zweiten Fahrzeug 4 angeordnet ist.

In einem Schritt 24 des Verfahrens 16 wird eine Anforderung von dem ersten Fahrzeug 2 an das zweite Fahrzeug 4 über die V2X-Kommunikationsverbindung 14 gesendet. Dabei kann eine Rollenaufteilung der Fahrzeuge 2, 4 umgesetzt werden, bei welcher ein Fahrzeug 4 als ein Spiegel und ein Fahrzeug 2 als ein Aktor fungieren. Im dargestellten Ausführungsbeispiel dient das zweite Fahrzeug 4 als ein Spiegel für das erste Fahrzeug 2 und ermöglicht ein Sensor-Sharing.

In einem weiteren Schritt 26 werden die Sensordaten der Sensorik 12 des zweiten Fahrzeugs 4 über die V2X-Kommunikationsverbindung 14 dem ersten Fahrzeug 2 bereitgestellt. Die Sensordaten können in Form eines sogenannten Live-Sensor Views bereitgestellt und durch das Steuergerät 6 des ersten Fahrzeugs 2 ausgewertet werden. Dabei kann das erste Fahrzeug 2 auf Kamerasensoren, LIDAR-Sensoren, Wärmebildkameras, Ultraschallsensoren und dergleichen des zweiten Fahrzeugs 4 zugreifen.

In einem optionalen Schritt 28 kann eine Prüfung eines kontinuierlichen Empfangs von Sensordaten über die V2X-Kommunikationsverbindung 14 durchgeführt werden.

Anschließend vollführt 30 das erste Fahrzeug 2 mindestens eine Aktion als Aktor und untersucht 32 die empfangenen Sensordaten des zweiten Fahrzeugs 4 hinsichtlich dieser Aktion.

Die mindestens eine Aktion des ersten Fahrzeugs 2 ist frei wählbar. Beispielsweise kann das erste Fahrzeug 2 ein Fahrmanöver bzw. das gesamte Fahrzeug 2 bewegen oder einzelne Komponenten 20 bewegen. Beispielsweise kann das erste Fahrzeug 2 die Seitenspiegel 20 elektronisch einklappen und ausklappen. Als weitere mögliche Aktionen können ein Ändern eines Lenkeinschlags, Ausfahren oder Ausrichten einer Rückfahrkamera, Ausfahren von Kofferraum-Handgriffen, Öffnen eines Fensters, Betätigen der Scheiben-Wisch-Wasch-Anlage und dergleichen durchgeführt werden.

Je nach Ausgestaltung können auch Leuchtmittel 18 zum Durchführen der mindestens einen Aktion verwendet werden. Beispielsweise können Leuchtmittel 18 des ersten Fahrzeugs 2 aktiviert und deaktiviert und/oder in ihrer Helligkeit oder Betriebsfrequenz eingestellt werden.

Wird die mindestens eine Aktion des ersten Fahrzeug 2 anhand der empfangenen Sensordaten des mindestens einen Sensors 12 des zweiten Fahrzeugs 4 detektiert 34, kann eine eindeutige Entscheidung oder wahrscheinlichkeitsbasierte Angabe zum Nachbarschaftsverhältnis zwischen dem ersten Fahrzeug 2 und dem zweiten Fahrzeug 4 getroffen werden. Insbesondere kann das zweite Fahrzeug 4 relativ zum ersten Fahrzeug 2 lokalisiert 36 werden, wenn das erste Fahrzeug 2 seine eigenen Aktionen und damit sich selbst in den Sensordaten des zweiten Fahrzeugs 4 erkennt.

Alternativ kann mindestens ein nicht-V2X-fähiges Fahrzeug 22 oder ein Hindernis zwischen dem ersten Fahrzeug 2 und dem zweiten Fahrzeug 4 festgestellt 38 werden, wenn die mindestens eine Aktion des ersten Fahrzeug 2 anhand der empfangenen Sensordaten des mindestens einen Sensors 12 des zweiten Fahrzeugs 4 nicht detektiert wird.

Anschließend kann über die V2X-Kommunikationsverbindung 14 eine Mitteilung 40 über das Ergebnis an das zweite Fahrzeug 4 übermittelt werden.

### BEZUGSZEICHENLISTE:

- 1: System
- 2: erstes Fahrzeug
- 4: zweites Fahrzeug
- 6: Steuergerät des ersten Fahrzeugs
- 8: Steuergerät des zweiten Fahrzeugs
- 10: Sensorik des ersten Fahrzeugs
- 12: Sensorik des zweiten Fahrzeugs
- 14: Kommunikationsverbindung
- 16: Verfahren
- 18: Leuchtmittel des ersten Fahrzeugs
- 20: Seitenspiegel des ersten Fahrzeugs
- 22: nicht-V2X-fähiges Fahrzeug
- 24: Übermitteln einer Anfrage / Anforderung
- 26: Bereitstellen von Sensordaten
- 28: Prüfung eines kontinuierlichen Empfangs
- 30: Ausführen einer Aktion
- 32: Auswerten von Sensordaten hinsichtlich einer Aktion
- 34: Detektieren einer Aktion
- 36: Lokalisieren des zweiten Fahrzeugs relativ zum ersten Fahrzeug
- 38: Erkennen eines Hindernisses oder nicht-V2X-fähigen Fahrzeugs
- 40: Übermitteln des Ergebnisses

## Patentansprüche

1. Verfahren (16) zum Lokalisieren eines V2X-fähigen zweiten Fahrzeugs (4) durch ein V2X-fähiges erstes Fahrzeug (2), wobei
- eine Anfrage von dem ersten Fahrzeug (2) an das zweite Fahrzeug (4) über eine V2X-Kommunikationsverbindung (14) gesendet wird,
- Sensordaten von mindestens einem Sensor (12) des zweiten Fahrzeugs (4) über die V2X-Kommunikationsverbindung (14) von dem ersten Fahrzeug (2) empfangen und ausgewertet werden,
- mindestens eine Aktion durch das erste Fahrzeug (2) ausgeführt wird,
- das zweite Fahrzeug (4) relativ zum ersten Fahrzeug (2) lokalisiert wird, wenn die mindestens eine Aktion des ersten Fahrzeugs (2) anhand der empfangenen Sensordaten des mindestens einen Sensors (12) des zweiten Fahrzeugs (4) detektiert wird.

2. Verfahren nach Anspruch 1, wobei mindestens ein nicht-V2X-fähiges Fahrzeug (22) oder ein Hindernis zwischen dem ersten Fahrzeug (2) und dem zweiten Fahrzeug (4) ermittelt wird, wenn die mindestens eine Aktion des ersten Fahrzeugs (2) anhand der empfangenen Sensordaten des mindestens einen Sensors (12) des zweiten Fahrzeugs (4) nicht detektiert wird.

3. Verfahren nach Anspruch 1 oder 2, wobei ein Lichtsignal als mindestens eine Aktion durch das erste Fahrzeug (2) erzeugt wird, wobei das Lichtsignal durch ein Aktivieren, Deaktivieren und/oder durch ein Verändern einer Helligkeit oder Frequenz mindestens eines Leuchtmittels (18) des ersten Fahrzeugs (2) erzeugt wird.

4. Verfahren nach Anspruch 3, wobei das Lichtsignal als eine Lichtsignalsequenz durch das erste Fahrzeug (2) erzeugt wird.

5. Verfahren nach Anspruch 3 oder 4, wobei durch das erzeugte Lichtsignal eine digitale Signatur übermittelt wird.

6. Verfahren nach einem der Ansprüche 1 bis 5, wobei eine Bewegung als mindestens eine Aktion durch das erste Fahrzeug (2) ausgeführt wird.

7. Verfahren nach Anspruch 6, wobei ein Fahrmanöver, eine Lenkeinschlagbewegung, eine Seitenspiegelbewegung, eine Scheibenwischerbewegung, eine Sensorbewegung und/oder eine elektrische Handgriffbewegung als mindestens eine Aktion durch das erste Fahrzeug (2) ausgeführt wird.

8. Verfahren nach einem der Ansprüche 1 bis 7, wobei eine Wärmesignatur als mindestens eine Aktion durch das erste Fahrzeug (2) erzeugt wird, wobei die Wärmesignatur durch ein Aktivieren einer Scheibenheizung, einer Spiegelheizung und/oder einer Sensorheizung erzeugt wird.

9. System (1), aufweisend ein erstes V2X-fähiges Fahrzeug (2) und mindestens ein zweites V2X-fähiges Fahrzeug (4), wobei das System (1) dazu eingerichtet ist, ein Verfahren (16) gemäß einem der vorhergehenden Ansprüche auszuführen.

## Claims

1. Method (16) for locating a V2X-enabled second vehicle (4) by a V2X-enabled first vehicle (2), wherein
- a request is sent from the first vehicle (2) to the second vehicle (4) via a V2X communication link (14),
- sensor data from at least one sensor (12) of the second vehicle (4) is received from the first vehicle (2) via the V2X communication link (14) and evaluated,
- at least one action is carried out by the first vehicle (2),
- the second vehicle (4) is located relative to the first vehicle (2) if the at least one action of the first vehicle (2) is detected based on the received sensor data of the at least one sensor (12) of the second vehicle (4).

2. Method according to claim 1, wherein at least one non-V2X-enabled vehicle (22) or an obstacle between the first vehicle (2)
and the second vehicle (4) is determined if the at least one
action of the first vehicle (2) is not detected based on the received sensor data of the at least one sensor (12) of the second vehicle (4).

3. Method according to claim 1 or 2, wherein a light signal is generated as at least one action by the first vehicle (2), wherein the light signal is generated by activating, deactivating and/or by changing a brightness or frequency of at least one illuminant (18) of the first vehicle (2).

4. Method according to claim 3, wherein the light signal is generated as a light signal sequence by the first vehicle (2).

5. Method according to claim 3 or 4, wherein a digital signature is transmitted by the generated light signal.

6. Method according to one of claims 1 to 5, wherein a movement is carried out as at least one action by the first vehicle (2).

7. Method according to claim 6, wherein a driving maneuver, a steering lock movement, a side mirror movement, a windscreen wiper movement, a sensor movement and/or an electric handle movement is carried out as at least one action by the first vehicle (2).

8. Method according to one of claims 1 to 7, wherein a heat signature is generated as at least one action by the first vehicle (2), wherein the heat signature is generated by activating a windscreen heater, a mirror heater and/or a sensor heater.

9. System (1) comprising a first V2X-enabled vehicle (2) and at least one second V2X-enabled vehicle (4), wherein the system (1) is configured to carry out a method (16) according to one of the preceding claims.

## Revendications

1. Procédé (16) de localisation d'un second véhicule (4) apte au V2X par un premier véhicule (2) apte au V2X, dans lequel :
- une demande est envoyée par le premier véhicule (2) au second véhicule (4) par l'intermédiaire d'une liaison de communication V2X (14),
- des données de capteur d'au moins un capteur (12) du second véhicule (4) sont reçues par le premier véhicule (2) par l'intermédiaire de la liaison de communication V2X (14) et analysées,
- au moins une action est exécutée par le premier véhicule (2),
- le second véhicule (4) est localisé par rapport au premier véhicule (2) lorsqu'est détectée au moins une action du premier véhicule (2) au moyen des données de capteur reçues de l'au moins un capteur (12) du second véhicule (4).

2. Procédé selon la revendication 1, dans lequel au moins un véhicule (22) non apte au V2X, ou un obstacle entre le premier véhicule (2) et le second véhicule (4), sont détectés lorsque n'est pas détectée l'au moins une action du premier véhicule (2) au moyen des données de capteur reçues de l'au moins un capteur (12) du second véhicule (4).

3. Procédé selon la revendication 1 ou 2, dans lequel un signal lumineux est généré par le premier véhicule (2) comme étant au moins une action, le signal lumineux étant généré par une activation, une désactivation et/ou une modification de la luminosité ou de la fréquence d'au moins d'un moyen lumineux (18) du premier véhicule (2).

4. Procédé selon la revendication 3, dans lequel le signal lumineux est généré par le premier véhicule (2) sous la forme d'une séquence de signaux lumineux.

5. Procédé selon la revendication 3 ou 4, dans lequel une signature numérique est transmise par l'intermédiaire du signal lumineux généré.

6. Procédé selon une des revendications 1 à 5, dans lequel un déplacement est exécuté par le premier véhicule (2) comme étant au moins une action.

7. Procédé selon la revendication 6, dans lequel une manoeuvre de conduite, un mouvement de braquage, un déplacement de rétroviseur latéral, un déplacement d'essuie-glace, un déplacement de capteur et/ou un déplacement de poignée électrique sont exécutés par le premier véhicule (2) comme étant au moins une action.

8. Procédé selon une des revendications 1 à 7, dans lequel une signature thermique est générée par le premier véhicule (2) comme étant au moins une action, la signature thermique étant générée par une activation d'un chauffage de vitre, d'un chauffage de rétroviseur et/ou d'un chauffage de capteur.

9. Système (1) comprenant un premier véhicule (2) apte au V2X et au moins un second véhicule (4) apte au V2X, dans lequel le système (1) est agencé pour exécuter un procédé (16) selon une des revendications précédentes.
